# FASCICULE DE BREVET EUROPEEN

(11) **EP 3 460 628 B1**
(45) Date de publication et mention de la délivrance du brevet: **13.05.2020**
(21) Numéro de dépôt: 18196436.2
(22) Date de dépôt: 25.09.2018
(51) Int. Cl.: G06F 1/18, G06F 1/16, G06F 3/041, H05K 5/06

(54) **TERMINAL, EN PARTICULIER DE CONTRÔLE D'ACCÈS, RESISTANT AUX CHOCS**
STOSSFESTES ENDGERÄT, INSBESONDERE FÜR DIE ZUGANGSKONTROLLE
TERMINAL, IN PARTICULAR FOR CONTROLLING ACCESS, RESISTANT TO IMPACTS

(30) Priorité: 25.09.2017 FR 1758844
(43) Date de publication de la demande: 27.03.2019
(73) Titulaire: Idemia Identity & Security France, 92400 Courbevoie (FR)
(72) Inventeur: Maillard, Sylvain Emile Henri, 92130 Issy les Moulineaux (FR); Julou, Melaine Antoine, 92130 Issy les Moulineaux (FR)
(74) Mandataire: Regimbeau

(56) Documents cités:
- JP-A- 2000 276 254
- US-A1- 2012 281 381

## Description

### DOMAINE TECHNIQUE GENERAL

La présente invention concerne le domaine des terminaux robustes, en particulier de contrôle d'accès biométrique.

### ETAT DE L'ART

On connait des terminaux de contrôle d'accès tels que les modèles de la famille MorphoAccess® SIGMA.

Ces terminaux, équipés d'un écran tactile et d'un ou plusieurs capteurs d'un trait biométrique (scanner d'empreinte digitale ou d'empreinte palmaire, caméra pour la reconnaissance faciale ou de l'iris, etc.) sont capables de référencer puis d'identifier des individus, et de déclencher des actions en fonction du résultat de cette identification, par exemple l'ouverture d'une porte si l'individu identifié à un droit d'accès.

On les trouve par exemple à l'entrée des sièges d'entreprises, dans les infrastructures sensibles comme les ports et aéroports, les bâtiments gouvernementaux, les laboratoires, les bâtiments militaires, les institutions financières, et tout simplement sur la porte de pièces sécurisées comme un local informatique ou une chambre forte.

Ces équipements s'avèrent très satisfaisants en termes de sécurité et d'ergonomie, mais on constate qu'ils sont fragiles et sensibles à l'environnement. En particulier ils ne résistent pas au vandalisme.

En effet, ils comprennent l'élément fragile qu'est une dalle tactile (recouvrant l'écran) difficilement protégeable, ce qui cantonne jusque-là généralement de tels terminaux de contrôle d'accès dans des bureaux, alors qu'il serait souhaitable de pouvoir les utiliser en conditions difficiles, tel qu'en milieu industriel (atelier, usine, mine, etc.), en extérieur (conditions climatiques sévères), et de façon générale au contact du public le cas échéant mal intentionné.

La dalle tactile est usuellement combinée avec une vitre recouvrant sa surface, ce qui permet l'étanchéité et une certaine tenue aux agressions. Les versions dites « extrêmes » des terminaux existants sont ainsi certifiés IP65 selon la norme EN 60529, ce qui signifie une protection totale contre les poussières, et une protection contre les jets d'eau de toutes directions à la lance (buse de 6,3 mm, distance 2,5 m à 3 m, débit 12,5 l/min ±5 %).

De façon similaire, il serait souhaitable de pouvoir résister à tous les chocs involontaires voire volontaires (attaque au marteau). Pour cela, il est nécessaire d'obtenir une certification IK09 voire IK10 selon la norme EN 62262, c'est-à-dire une résistance à un impact répété de 10J (20J pour IK10), ce qui correspond à la chute de plusieurs mètres d'une masse en acier de 500g. De plus, l'étanchéité IP65 doit être maintenue malgré le recul de l'écran lors des impacts.

Cependant, la taille des dalles tactiles de ces terminaux est trop grande pour que la vitre puisse absorber un tel impact. Plus précisément, malgré une forte épaisseur et l'utilisation d'excellents matériaux dans lesdits modèles « extrêmes », sous un impact répété de plusieurs joule la vitre se déforme et détruit systématiquement la dalle.

La première solution à ce problème est tout simplement de diminuer la taille de l'écran, et donc celle de la dalle et de la vitre de sorte à augmenter la rigidité de cette dernière. Une telle solution n'est pas envisageable car elle nuirait fortement à l'ergonomie du terminal.

La deuxième solution est d'augmenter la rigidité de la structure, soit en bridant/collant fortement la dalle à la vitre, soit en augmentant l'épaisseur de cette dernière. Une telle solution fonctionne, mais reste limitée car on finit par perdre la sensibilité de l'écran tactile.

Le document JP 2000 276254 A décrit un terminal avec un dalle tactile.

Il serait par conséquent souhaitable de disposer d'une nouvelle structure d'écran tactile de terminal de contrôle d'accès qui remplisse ses critères de robustesse et d'étanchéité, sans pour autant diminuer sa sécurité, sa sensibilité, ni même sa facilité de montage.

### PRESENTATION DE L'INVENTION

Selon un premier aspect, la présente invention concerne un terminal selon la revendication indépendante 1.

Selon d'autres caractéristiques avantageuses et non limitatives :
- l'écran tactile fixé à la vitre mais pas au châssis ;
- des supports en mousse souple sont enserrés entre l'écran tactile et le châssis ;
- le premier joint présente une dureté Shore A au moins double, préférentiellement au moins quadruple, de la dureté Shore A du deuxième joint ;
- le premier joint est en une mousse de polyuréthane ou un silicone dur ;
- le deuxième joint est en une mousse de silicone ou un silicone souple ;
- le châssis et/ou la coque est en un matériau choisi parmi l'acrylonitrile butadiène styrène, le polycarbonate ou un mélange d'acrylonitrile butadiène styrène et de polycarbonate ;
- la vitre présente une épaisseur entre 3 et 6 mm ;
- la vitre n'est en contact ni avec le châssis ni la coque ;
- l'écran tactile comprend un écran recouvert d'une dalle tactile et disposé dans un boitier, et est certifié IK08 selon la norme EN 62262 ;
- le terminal est adapté pour le contrôle d'accès, et comprend en outre des moyens de traitement de données et au moins un capteur d'un trait biométrique ;
- la coque est fixée sur le châssis ;
- le châssis comprend un ou plusieurs crochets s'étendant entre la zone périphérique de la vitre et la coque.

Selon un deuxième aspect, la présente invention concerne un procédé de fabrication d'un terminal selon le premier aspect, caractérisé en ce qu'il comprend la mise en œuvre d'étapes de :
(a) montage de l'écran tactile sur le châssis ;
(b) par-dessus l'écran tactile, pressage de la vitre contre le premier joint jusqu'à ce que la vitre soit maintenue par le ou les crochets ;
(c) par-dessus la vitre, pressage de la coque contre le deuxième joint.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente de façon générale un mode de réalisation du terminal selon l'invention ;
- la figure 2 est un détail d'une coupe selon un plan verticale de la partie supérieur du terminal de la figure 1 ;
- la figure 3 est un détail de la figure 2 au niveau d'un bord d'une vitre du terminal.

### DESCRIPTION DETAILLEE

### Architecture

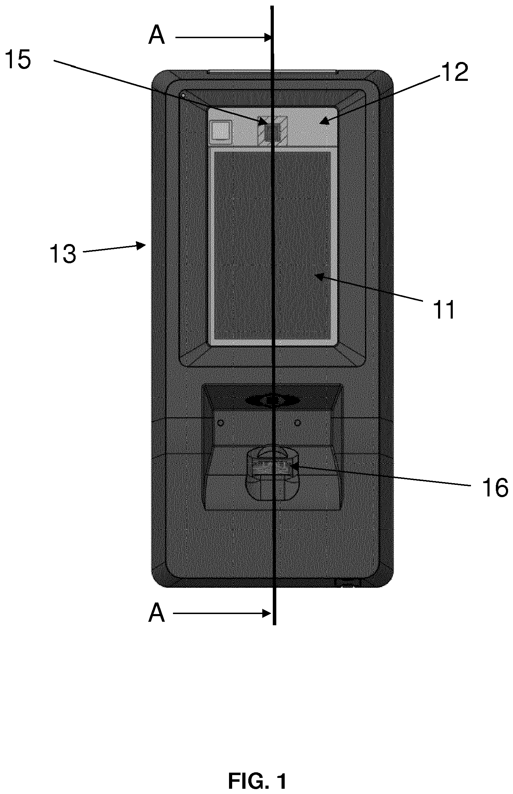

En référence à la **figure 1****,** est proposé un terminal 1 de type terminal de contrôle d'accès. Ce terminal 1 comprend un châssis 10 (non visible sur la figure 1 car à l'intérieur), un écran tactile 11, une vitre 12 protégeant au moins l'écran tactile 11 (la vitre 12 n'est pas épaissie par rapport à l'art antérieur pour ne pas diminuer la sensibilité tactile, présente typiquement une épaisseur entre 3 et 6 mm, par exemple entre 3.5 et 5 mm), et une coque externe 13 entourant le châssis 10 et formant boitier de protection du terminal 1.

Dans la suite de la présente description, on prendra l'exemple d'un terminal de contrôle d'accès 1. De façon générale la présente invention peut s'appliquer à tout terminal équipé d'un large écran tactile à protéger, par exemple un distributeur de billets, une borne d'achat de tickets de transports, un valideur, etc. L'homme du métier saura transposer.

Le terminal de contrôle d'accès 1 de la figure 1 comprend à ce titre des moyens de traitement de données (non représentés) disposés dans le châssis 10 pour mettre en œuvre le contrôle d'accès en fonction des données qu'il reçoit. Il peut à ce titre être connecté à un actionneur mécanique tel qu'un verrou ou une barrière pour permettre l'accès physique d'un utilisateur lorsque l'accès lui est accordé.

Le terminal 1 est préférentiellement biométrique, c'est-à-dire qu'il comprend au moins un capteur d'un trait biométrique 15, 16. L'exemple de terminal représenté sur les figures présente ainsi une caméra 15 (disposée au voisinage de l'écran tactile 11, et également protégée par la vitre 12) ainsi qu'un capteur d'empreintes digitales 16.

L'homme du métier pourra utiliser tout capteur connu d'un trait biométrique et mettre en œuvre toute technique connue d'identification ou d'authentification biométrique.

### Montage de la vitre

Dans la suite de la description, on définira une direction D allant de l'intérieur vers l'extérieur du terminal selon un axe orthogonal à la surface de l'écran tactile 11.

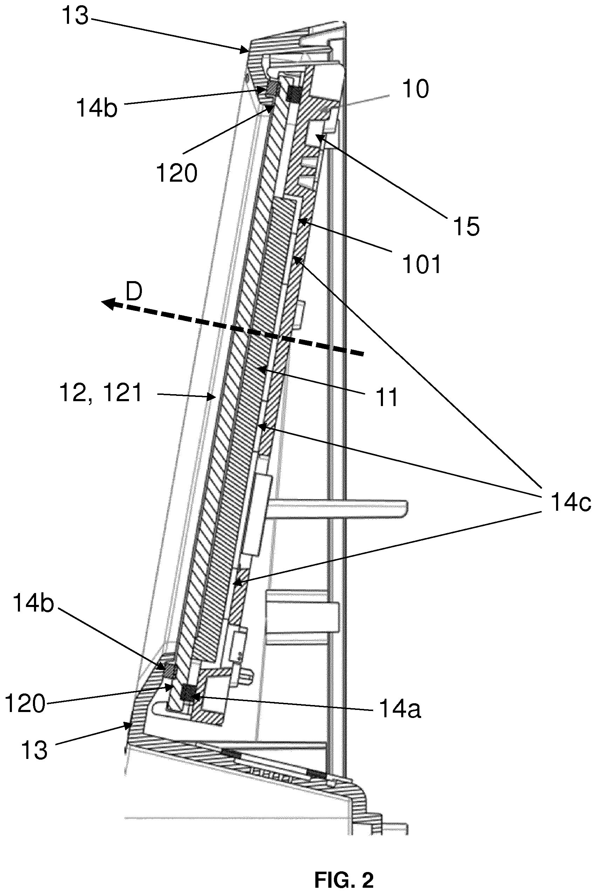

Cette direction est indiquée par une flèche sur la **figure 2****,** qui représente une coupe de la partie supérieure du terminal 1 (jusqu'au capteur d'empreintes digitales 16) selon le plan vertical AA visible sur la figure 1

Ainsi, le terminal 1 est tel que sont successivement enserrés entre le châssis 10 et la coque 13 (suivant ladite direction D) :
- un premier joint 14a (joint entre le châssis 10 et la vitre 12),
- une zone périphérique 120 de la vitre 12, et
- un deuxième joint 14b (joint entre la vitre 12 et la coque 13).

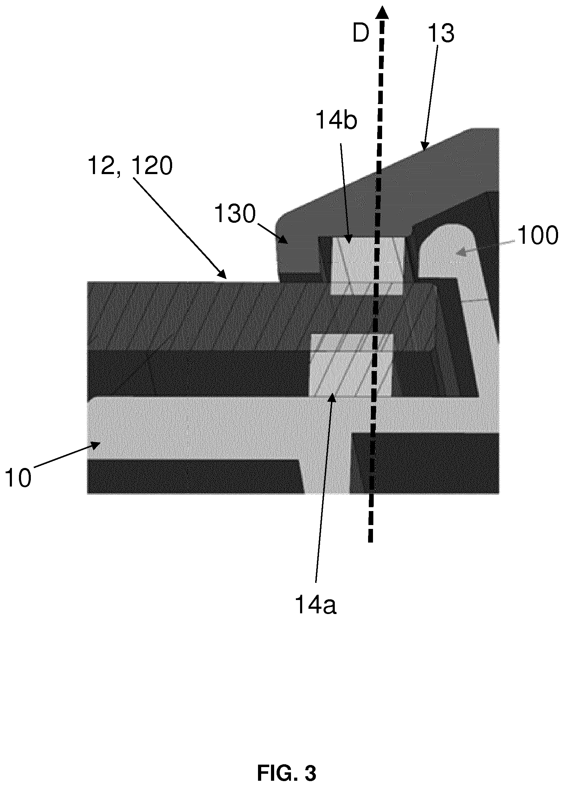

Cela apparait tout particulièrement à la figure 3, qui représente un détail de la structure au niveau de la zone périphérique 120.

Par enserrage, on entend que l'ensemble est pressé, c'est-à-dire que les joints 14a, 14b sont comprimés. La coque 13 est préférentiellement fixée au châssis 10 (par exemple par des vis), en particulier à l'extérieur de la vitre 12, pour maintenir cette compression.

En d'autres termes, on a une structure sandwich qui comprend dans l'ordre (et exclusivement) le châssis 10, le premier joint 14a, la vitre 12, le deuxième joint 14b, la coque 13.

On voit que cette structure sandwich n'incorpore pas l'écran tactile 11 lui-même. En effet, et comme l'on verra plus tard, l'écran tactile 11 est disposé entre une partie centrale 121 de la vitre 12 et le châssis 10, préférentiellement dans une cavité 101 du châssis 10.

Ainsi, la coque 13 ne recouvre que la zone périphérique 120, c'est-à-dire une bande de quelques millimètres à quelques centimètres de large sur le bord de la vitre 12, mais pas la zone centrale 121, à travers de laquelle on peut voir l'écran tactile 11. Les joints 14a, 14b sont ainsi déposés le long des bords de la vitre 12. Si la vitre 12 a la forme d'un rectangle, les joints 14a, 14b forment un « cadre » rectangulaire fermé (i.e. formant boucle).

### Support de l'écran

L'écran tactile 11 est par exemple un écran tactile du commerce comprenant un écran (simple) recouvert d'une dalle tactile et disposé dans un boitier, préférentiellement déjà certifié IK08 selon la norme EN 62262.

Comme l'on va voir le présent montage permet de rendre résistant aux chocs IK09 voire IK10 un écran tactile 11 initialement prévu IK08.

En particulier, l'écran tactile 11 est fixé à un seul du châssis 10 et de la vitre 12, préférentiellement à la vitre 12 mais pas au châssis 10 (par exemple il est bridé ou collé/adhésivé à la vitre 12). L'objectif d'un tel montage « flottant » de l'écran tactile 11 et de la vitre 12 est que l'énergie d'un impact mécanique sur la vitre 12 soit essentiellement transmise au châssis 10 via un élément absorbant 14a et non à l'écran 11.

De façon préférée, des supports en mousse souple 14c de type entretoises sont enserrés entre l'écran tactile 11 et le châssis 10 (avantageusement au fond de la cavité 101).

Ainsi, quand bien même un fort impact causerait la déformation de la vitre 12 jusqu'à appuyer sur l'écran tactile 11, celui-ci reculerait en comprimant les supports en mousse 14c au lieu de se déformer lui-même.

### Matériaux

Afin d'amortir au maximum les chocs sur l'écran, on choisit préférentiellement des matériaux différents, choisis parmi les élastomères, pour le premier et le deuxième joint 14a, 14b.

En effet les deux joints n'ont pas la même fonction : le premier joint 14a (joint vitre/châssis) est celui qui assure l'absorption et la restitution de l'énergie des impacts, une dureté élevée est requise, alors que le deuxième joint 14b (joint vitre/coque) assure l'étanchéité, et au contraire une dureté faible et une résilience quasi-nulle est requise de sorte à maintenir l'étanchéité même en cas de recul de la vitre 12 lors de l'impact.

Ainsi, le premier joint 14a est choisi dans un matériau beaucoup plus dur que le deuxième joint 14b. En particulier, le premier joint 14a présente avantageusement une dureté Shore au moins double, voire au moins quadruple, voire sextuple, de la dureté Shore du deuxième joint 14b.

Une telle différence de dureté présente en surplus l'avantage d'aider à bien maitriser la compression du deuxième joint 14b qui assure l'étanchéité.

De façon préférée, le premier joint 14a a une dureté entre 40 Shore A et 60 Shore A, en particulier proche de 60 Shore A (on prend notamment une mousse de polyuréthane par exemple du type Poron, ou un silicone dur par exemple du type KSILGP 40 basse résilience). La dureté Shore A est conforme aux normes ISO 868 et 7619, ASTM D 2240 et DIN 53505.

En ce qui concerne le deuxième joint 14b, sa dureté est préférentiellement entre 10 Shore A et 30 Shore A.

Selon un premier mode de réalisation, le montage est réalisé à la presse et l'on peut choisir un matériau d'une dureté entre 20 Shore A et 30 Shore A, notamment un silicone souple par exemple du type KSIL GT21.

Selon un deuxième mode de réalisation préféré, le montage est réalisé sans presse (c'est-à-dire à la main), et l'on peut choisir un matériau d'une dureté entre 10 Shore A et 20 Shore A, en particulier proche de 10 Shore A, notamment une mousse de silicone par exemple du type Rodgers HT800.

Tous ces matériaux des joints 14a, 14b résistent à une température au-delà de 85°C.

En ce qui concerne, le châssis 10 et la coque 13, ils sont avantageusement en un matériau résistant aux chocs, aux UV, au feu, à la température, etc. Il s'agit notamment d'un matériau choisi parmi l'acrylonitrile butadiène styrène (ABS), le polycarbonate (PC), ou un mélange des deux (ABS/PC), et préférentiellement ce dernier.

Ainsi, pour le châssis 10, l'ABS/PC FR3010 est un exemple d'excellent compromis. Alternativement, le PC de type Lexan est adapté. Pour la coque 13, des PC compatible UV sont adaptés.

### Autres améliorations

En référence à la figure 3, le châssis 10 comprend avantageusement un ou plusieurs crochets 100 s'étendant entre la zone périphérique 120 de la vitre 12 et la coque 13.

En d'autres termes, ces crochets 100 s'étendent depuis le châssis 10, dépassent le premier joint 14a et la vitre 12, et viennent se recourber entre la vitre 12 et la coque au niveau du deuxième joint 14b.

La mise en place de la vitre 12 par-dessus l'écran tactile 11 implique de déformer ces crochets 100 de sorte à « clipser » la vitre 12 sur le châssis 10. Cela facilite grandement le montage car cela empêche la vitre 12 de tomber pendant que l'on met en place la coque 13.

On a ainsi pendant le montage du terminal 10 une autre structure sandwich temporaire telle que sont successivement enserrés entre le châssis 10 et les crochets 100 (suivant ladite direction précitée) :
- le premier joint 14a (joint entre le châssis 10 et la vitre 12), et
- la zone périphérique 120 de la vitre 12.

Par ailleurs, de façon préférée, la vitre 12 n'est en contact ni avec le châssis 10 ni la coque 13. En d'autres termes, elle n'est tenue que par les joints 14a, 14. Cela permet de ne jamais induire d'effort dans les coins de la vitre 12 qui font partie, avec le centre, des parties les plus fragiles.

On constatait en effet dans certains cas que ce n'était pas tant l'impact du marteau sur la vitre 12 qui brisait celle-ci, mais l'impact de la vitre 12 sur le châssis 10 ou la coque 13.

Une telle structure entraîne qu'in fine la vitre 12 est plus susceptible de se déplacer sous l'impact que si elle était fixée au châssis 10 ou à la coque 13, mais en combinaison avec les mousse 14c qui soutiennent l'écran tactile 11 cela ne pose pas de problème. En résumé la vitre casse tout simplement moins facilement.

On note que comme l'on voit sur la figure 3, cela n'est pas incompatible avec la présence des crochets 100. En effet, ces deniers ne sont en contact avec la vitre 12 que tant que l'ensemble n'est pas pressé. Plus précisément, lorsque l'on place la coque 13 sur la vitre 12 et que l'on vient appliquer une force sur l'ensemble, les premier et deuxième joints 14a, 14b se compriment et leur épaisseur diminue. La vitre 12 s'écarte alors des crochets 100, qui ne risque plus d'endommager un coin ou un bord lors d'un impact.

L'homme du métier saura choisir les bonnes dimensions des crochets 100 en fonction des matériaux des joints 14a, 14b et de leur compression souhaitée.

Enfin, on remarque sur la figure 3 que la coque 13 peut comprendre un bord protubérant 130, s'étendant vers la vitre 12 (i.e. de l'extérieur vers l'intérieur), le long du deuxième joint 14b. Ce bord protubérant 130 diminue l'écart entre la vitre 12 et la coque 13, et augmente l'étanchéité (il permet que le deuxième joint 14b soit moins exposé à l'environnement et le protège).

Sa longueur est choisie inférieure à l'épaisseur du deuxième joint 14b comprimé, de sorte qu'existe l'interstice 131, de sorte à éviter le contact entre la vitre 12 et la coque 13 comme prévu précédemment.

### Procédé de fabrication du terminal

Selon un deuxième aspect, l'invention concerne le procédé de fabrication du terminal 1 selon le premier aspect, i.e. l'assemblage des pièces de sorte à atteindre l'état représenté par les figures.

Dans le mode de réalisation préféré où le châssis 10 comprend des crochets 100, ce procédé comprend les étapes suivantes :
(a) montage de l'écran tactile 11 sur le châssis 10 (typiquement dans la cavité 101 après la mise en place des supports en mousse 14c) ;
(b) par-dessus l'écran tactile 11, pressage (à la main ou à la presse) de la vitre 12 contre le premier joint 14a jusqu'à ce que la vitre 12 soit maintenue par le ou les crochets 100 (c'est-à-dire légèrement déformation du premier joint 14a et clipsage) ;
(c) par-dessus la vitre 12, pressage de la coque 13 (à la main ou à la presse également) contre le deuxième joint 14b (c'est-à-dire déformation du deuxième joint, et déformation supplémentaire du premier joint 14a jusqu'à ce que le contact de la vitre 12 avec les crochets 100 disparaisse).

La coque 13 peut alors être fixée au châssis 10 de sorte à ce que l'ensemble soit bloqué.

La présence des crochets 100 permet une pause entre l'étape (b) et (c). En l'absence de ces derniers, les étapes (b) et (c) doivent être faites simultanément.

## Revendications

1. Terminal (1) comprenant un châssis (10), un écran tactile (11), une vitre (12) de protection de l'écran tactile (11), une coque externe (13), dans lequel sont successivement enserrés entre le châssis (10) et la coque (13) :
- un premier joint (14a),
- une zone périphérique (120) de la vitre (12), et
- un deuxième joint (14b) ;
et dans lequel l'écran tactile (11) est disposé entre une partie centrale (121) de la vitre (12) et le châssis (10), l'écran tactile (11) étant fixé à un seul parmi le châssis (10) et la vitre (12) ;
et dans lequel le châssis comprend plusieurs crochets qui s'étendent depuis le châssis (10), dépassent le premier joint (14a) et la vitre (12), et viennent se recourber entre la vitre (12) et la coque au niveau du deuxième joint (14b), le châssis est fixé à la coque de sorte à ce que l'ensemble châssis/joints/vitre soit bloqué par pression.

2. Terminal selon la revendication 1, dans lequel l'écran tactile (11) est fixé à la vitre (12) mais pas au châssis (10).

3. Terminal selon la revendication 2, dans lequel des supports en mousse souple (14c) sont enserrés entre l'écran tactile (11) et le châssis (10).

4. Terminal selon l'une des revendications 1 et 3, dans lequel le premier joint (14a) présente une dureté Shore A au moins double, préférentiellement au moins quadruple, de la dureté Shore A du deuxième joint (14b).

5. Terminal selon l'une des revendications 1 à 4, dans lequel le premier joint (14a) est en une mousse de polyuréthane ou un silicone dur.

6. Terminal selon l'une des revendications 1 à 5, dans lequel le deuxième joint (14a) est en une mousse de silicone ou un silicone souple.

7. Terminal selon l'une des revendications 1 à 6, dans lequel le châssis (10) et/ou la coque (13) est en un matériau choisi parmi l'acrylonitrile butadiène styrène, le polycarbonate, et un mélange d'acrylonitrile butadiène styrène et de polycarbonate.

8. Terminal selon l'une des revendications 1 à 7, dans lequel la vitre (12) présente une épaisseur entre 3 et 6 mm.

9. Terminal selon l'une des revendications 1 à 8, dans lequel la vitre (12) n'est en contact ni avec le châssis (10) ni la coque (13).

10. Terminal selon l'une des revendications 1 à 9, dans lequel l'écran tactile (11) comprend un écran recouvert d'une dalle tactile et disposé dans un boitier, et est certifié IK08 selon la norme EN 62262.

11. Terminal selon l'une des revendications 1 à 10, adapté pour le contrôle d'accès, comprenant en outre des moyens de traitement de données et au moins un capteur d'un trait biométrique (15, 16).

12. Terminal selon l'une des revendications 1 à 11, dans lequel la coque (13) est fixée sur le châssis (10).

13. Procédé de fabrication d'un terminal (1) selon l'une des revendications 1 à 12, **caractérisé en ce qu'**il comprend la mise en œuvre d'étapes de :
(a) montage de l'écran tactile (11) sur le châssis (10) ;
(b) par-dessus l'écran tactile (11), pressage de la vitre (12) contre le premier joint (14a) jusqu'à ce que la vitre (12) soit maintenue par le ou les crochets (100) ;
(c) par-dessus la vitre (12), pressage de la coque (13) contre le deuxième joint (14b).

## Patentansprüche

1. Endgerät (1), umfassend einen Grundrahmen (10), einen Berührungsbildschirm (11), eine Scheibe (12) zum Schutz des Berührungsbildschirms (11), eine Außenhülle (13), wobei nacheinander zwischen dem Grundrahmen (10) und der Hülle (13) eingeschlossen sind:
- eine erste Dichtung (14a),
- eine Randzone (120) der Scheibe (12) und
- eine zweite Dichtung (14b);
und wobei der Berührungsbildschirm (11) zwischen einem zentralen Teil (121) der Scheibe (12) und dem Grundrahmen (10) angeordnet ist, wobei der Berührungsbildschirm (11) nur an einem von dem Grundrahmen (10) und der Scheibe (12) befestigt ist;
und wobei der Grundrahmen mehrere Haken umfasst, die sich aus dem Grundrahmen (10) erstrecken, über die erste Dichtung (14a) und die Scheibe (12) herausragen, und sich zwischen der Scheibe (12) und der Hülle im Bereich der zweiten Dichtung (14b) umbiegen, der Grundrahmen an der Hülle befestigt ist, sodass die Einheit Grundrahmen/ Dichtungen/ Scheibe durch Druck blockiert wird.

2. Endgerät nach Anspruch 1, wobei der Berührungsbildschirm (11) an der Scheibe (12), jedoch nicht an dem Grundrahmen (10) befestigt ist.

3. Endgerät nach Anspruch 2, wobei Abstützungen aus weichem Schaumstoff (14c) zwischen dem Berührungsbildschirm (11) und dem Grundrahmen (10) eingeschlossen sind.

4. Endgerät nach einem der Ansprüche 1 bis 3, wobei die erste Dichtung (14a) mindestens eine doppelte, vorzugsweise mindestens vierfache Shore-Härte A gegenüber der Shore-Härte A der zweiten Dichtung (14b) aufweist.

5. Endgerät nach einem der Ansprüche 1 bis 4, wobei die erste Dichtung (14a) aus Polyurethan-Schaumstoff oder einem festen Silikon ist.

6. Endgerät nach einem der Ansprüche 1 bis 5, wobei die zweite Dichtung (14a) aus einem Silikon-Schaumstoff oder einem weichen Silikon ist.

7. Endgerät nach einem der Ansprüche 1 bis 6, wobei der Grundrahmen (10) und/oder die Hülle (13) aus einem Material ist, das aus Acrylnitril-Butadien-Styrol, Polycarbonat, und einem Gemisch aus Acrylnitril-Butadien-Styrol und Polycarbonat ausgewählt ist.

8. Endgerät nach einem der Ansprüche 1 bis 7, wobei die Scheibe (12) eine Stärke zwischen 3 und 6 mm aufweist.

9. Endgerät nach einem der Ansprüche 1 bis 8, wobei die Scheibe (12) weder mit dem Grundrahmen (10), noch mit der Hülle (13) in Kontakt ist.

10. Endgerät nach einem der Ansprüche 1 bis 9, wobei der Berührungsbildschirm (11) einen Bildschirm umfasst, der mit einem Berührungstastfeld abgedeckt ist, und in einem Gehäuse angeordnet ist, und gemäß der Norm EN 62262 IK08 zertifiziert ist.

11. Endgerät nach einem der Ansprüche 1 bis 10, das für die Zugangskontrolle angepasst ist, weiter Datenverarbeitungsmittel und mindestens einen Sensor für ein biometrisches Merkmal (15, 16) umfassend.

12. Endgerät nach einem der Ansprüche 1 bis 11, wobei die Hülle (13) an dem Grundrahmen (10) befestigt ist.

13. Verfahren zur Herstellung eines Endgeräts (1) nach einem der Ansprüche 1 bis 12, **dadurch gekennzeichnet, dass** es die Umsetzung folgender Schritte umfasst:
(a) Montage des Berührungsbildschirms (11) an dem Grundrahmen (10);
(b) über den Berührungsbildschirm (11) Anpressen der Scheibe (12) gegen die erste Dichtung (14a), bis die Scheibe (12) durch den oder die Haken (100) festgehalten wird;
(c) über die Scheibe (12), Anpressen der Hülle (13) gegen die zweite Dichtung (14b).

## Claims

1. Terminal (1) comprising a frame (10), a touchscreen (11), a glass panel (12) protecting the touchscreen (11), an outer shell (13), wherein the following are successively gripped between the frame (10) and the shell (13):
- a first seal (14a),
- a peripheral region (120) of the glass panel (12), and
- a second seal (14b);
and wherein the touchscreen (11) is arranged between a central portion (121) of the glass panel (12) and the frame (10), the touchscreen (11) being secured to only one from among the frame (10) and the glass panel (12);
and wherein the frame comprises several hooks which extend from the frame (10), pass past the first seal (14a) and the glass panel (12), and are curved between the glass panel (12) and the shell at the level of the second seal (14b), the frame is secured to the shell such that the frame/seals/glass panel assembly is blocked by pressure.

2. Terminal according to claim 1, wherein the touchscreen (11) is secured to the glass panel (12) but not to the frame (10).

3. Terminal according to claim 2, wherein flexible foam supports (14c) are gripped between the touchscreen (11) and the frame (10).

4. Terminal according to one of claims 1 and 3, wherein the first seal (14a) has a Shore A hardness at least twice, preferably at least four times the Shore A hardness of the second seal (14b).

5. Terminal according to one of claims 1 to 4, wherein the first seal (14a) is in polyurethane foam or hard silicone.

6. Terminal according to one of claims 1 to 5, wherein the second seal (14a) is in silicone foam or soft silicone.

7. Terminal according to one of claims 1 to 6, wherein the frame (10) and/or the shell (13) is in a material selected from among acrylonitrile butadiene styrene, polycarbonate, and a mixture of acrylonitrile butadiene styrene and polycarbonate.

8. Terminal according to one of claims 1 to 7, wherein the glass panel (12) has a thickness of between 3 and 6mm.

9. Terminal according to one of claims 1 to 8, wherein the glass panel (12) is in contact neither with the frame (10) nor with the shell (13).

10. Terminal according to one of claims 1 to 9, wherein the touchscreen (11) comprises a screen covered by a touch display and arranged in a casing, and is IK08 rated in accordance with standard EN 62262.

11. Terminal according to one of claims 1 to 10, adapted for access control, further comprising data processing means and at least one biometric feature sensor (15, 16).

12. Terminal according to one of claims 1 to 11, wherein the shell (13) is secured to the frame (10).

13. Process for manufacturing a terminal (1) according to one of claims 1 to 12, **characterised in that** it comprises implementing steps of:
(a) mounting the touchscreen (11) on the frame (10);
(b) above the touchscreen (11), pressing the glass panel (12) against the first seal (14a) until the glass panel (12) is held in position by the hook(s) (100);
(c) above the glass panel (12), pressing the shell (13) against the second seal (14b).
